# EUROPÄISCHE PATENTANMELDUNG

(11) **EP 1 662 181 A2**
(43) Veröffentlichungstag der Anmeldung: **31.05.2006**
(21) Anmeldenummer: 05024640.4
(22) Anmeldetag: 11.11.2005
(51) Int. Cl.: F16H 59/02, F16H 59/10

(54) **Steuerung eines automatisierten Schaltgetriebes durch Auswertung der Betätigungsgeschwindigkeit eines Fahrbereichsschalters**

(30) Priorität: 25.11.2004 DE 102004056927
(71) Anmelder: ZF FRIEDRICHSHAFEN AG, 88038 Friedrichshafen (DE)
(72) Erfinder: Kramer, Rupert, 88048 Friedrichshafen (DE); Veittinger Stefan, 88085 Langenargen (DE); Gröner, Wolfgang, 88048 Friedrichshafen (DE)

(57) **Zusammenfassung**

Steuerungsverfahren für ein automatisiertes Schaltgetriebe, bei dem mittels eines Fahrbereichsschalters auf für den Fahrer einfache und intuitiv bedienbare Weise ein Wechsel des Fahrbereiches sowohl zwischen den Vorwärtsgangbereichen und den Rückwärtsgangbereichen als auch zwischen einem Schnellgangmodus und einem Kriechgangmodus bewirkt werden kann. Dabei wählt die Steuerungseinrichtung unter einer Mehrzahl von Getriebegängen einen einzulegenden Getriebegang unter Berücksichtigung von Informationen aus, welche von einem Bediener mit Hilfe eines Fahrbereichsschalters zur manuellen Auswahl eines Fahrgangbereiches eingegeben wird, wobei der Fahrbereichsschalter zumindest eine D-Schaltstellung zur Auswahl eines Vorwärtsfahrgangbereichs, eine N-Stellung zur Auswahl einer Leerlaufstellung des automatisierten Schaltgetriebes und eine R-Schaltstellung zur Auswahl eines Rückwärtsfahrgangbereichs besitzt, und das automatisierte Schaltgetriebe in einem Schnellgangmodus sowie in einen Kriechgangmodus betrieben werden kann. Die Steuerungseinrichtung zieht die Verstellgeschwindigkeit des Fahrbereichsschalters zumindest mit heran, um zu entscheiden, ob ein Kriechgangmodus oder ein Schnellgangmodus aktiviert werden soll.

## Beschreibung

Die Erfindung betrifft ein Verfahren zur Steuerung eines automatisierten Schaltgetriebes gemäß dem Oberbegriff des Patentanspruchs 1.

Automatisierte Schaltgetriebe werden seit geraumer Zeit in unterschiedlichen Kraftfahrzeugtypen, wie beispielsweise mittelschwere und schwere Lastkraftwagen verwendet. Im Unterschied zu den meisten PKW-Getrieben weisen diese Getriebe nicht nur eine größere Zahl von Gängen auf, sondern besitzen auch bestimmte Gänge, die nicht primär für die Verwendung im normalen Fahrbetrieb vorgesehen sind, sondern in erster Linie für Anfahrvorgänge bei beladenem Fahrzeug und/oder an starken Steigungen und/oder für den Rangierbetrieb ausgelegt sind. Diese Gänge ermöglichen eine sehr langsame Fahrt bei einem sehr hohen auf die Räder übertragbaren Drehmoment und werden im Folgenden als Kriechgänge bezeichnet, während die hauptsächlich für den normalen Fahrbetrieb genutzten Gänge als Schnellgänge bezeichnet werden.

Da automatisierte Gangwahlvorrichtungen in mehrfacher Hinsicht erhebliche Vorteile gegenüber einer manuellen Gangwahl durch den Fahrer aufweisen, werden diese zunehmend auch bei schweren, über Kriechgänge verfügenden Fahrzeugen eingesetzt. Dabei ist im Griffbereich des Fahrers zumeist ein Fahrbereichsschalter angeordnet, welcher zumindest die drei Einstellungen D, N und R aufweist. Von der automatisierten Schaltvorrichtung wird in der D-Stellung des Fahrbereichsschalters automatisch der jeweils optimale Vorwärtsfahrgang ermittelt, und ohne Zutun des Fahrers oder nach einer Bestätigungseingabe durch den Fahrer eingelegt. Dabei wird der einzulegende Gang z.B. in Abhängigkeit von der Motordrehzahl, Motorlast, Fahrgeschwindigkeit, Beschleunigung, Motorkennfeld und gegebenenfalls weiteren Parametern ermittelt. In der N-Stellung des Fahrbereichsschalters wird das Getriebe in eine Neutralstellung geschaltet, und in der R-Stellung wird der Rückwärtsgang eingelegt bzw. unter verschiedenen Rückwärtsfahrgängen der geeignete ausgewählt.

Zusätzlich steht dem Fahrer oft ein funktionell erweiterter Fahrbereichsschalter zur Verfügung, um die Gangwahl der automatisierten Schaltvorrichtung zu beeinflussen. Dies kann beispielsweise über zusätzliche Schaltstellungen des Fahrbereichsschalters mit der Bezeichnung 1, 2, 3 usw. bewirkt werden, wobei diese zusätzlichen Stellungen meistens die Anzahl der schaltbaren Vorwärtsgänge beschränken. Alternativ dazu oder zusätzlich kann der Fahrer oft über nicht in den Fahrbereichsschalter integrierte Gangwahlvorrichtungen jeweils einen Hochschalt- oder Rückschaltvorgang auslösen. Dabei wird das Getriebe entweder ausgehend vom automatisch gewählten Gang um eine Gangstufe rauf bzw. runtergeschaltet, oder der Fahrer wählt einen Vollmanuell-Modus, z.B. über eine zusätzliche Einstellung M des Fahrbereichsschalters, und schaltet das Getriebe nach Art einer Tiptronic®-Schaltung, also in einer sequentiellen Weise, bei der jede Schaltbetätigung einem Gangwechsel in der gewählten Richtung entspricht.

Eine automatisierte Schaltvorrichtung kann allerdings nicht zuverlässig erkennen, ob ein Fahrer bei der Einstellung des Fahrschalters in die D-Stellung des Vorwärtsfahrbereiches oder in die R-Stellung des Rückwärtsfahrbereiches die Intention hat, das Fahrzeug millimetergenau in Kriechgeschwindigkeit zu bewegen, um beispielsweise ein schwieriges Rangiermanöver auszuführen, oder ob der Fahrer einen normalen Anfahr- bzw. Rückfahrvorgang plant. Daher muss zur Auswahl des Kriechgang-Modus bzw. des Schnellgang-Modus diese Intention des Fahrers gesondert abgefragt werden.

Aus der DE 40 06 653 A1 ist eine Schalteinrichtung zum halbautomatischen Schalten von vielstufigen Zahnradwechselgetrieben bekannt, welche über eine Gangwähleinrichtung und einen Fahrbereichsschalter verfügt. Der Fahrbereichsschalter ist als Drehschalter ausgebildet und kann neben den Stellungen D, N und R noch über eine M-Stellung verfügen, die ein manuelles Einstellen der Gänge gestattet. Zusätzlich können noch weitere Stellungen für nicht näher erläuterte Fahrprogramme X1 und X2 vorgesehen sein, wodurch sich die einer Drehrichtung des Drehschalters folgend die Schaltreihenfolge M - D - N - R - X1 - X2 ergibt.

Selbst wenn in Erweiterung der Offenbarung der DE 40 06 653 A1 angenommen würde, dass die Fahrprogramme X1 und X2 für Kriechgänge in Vorwärts- und Rückwärtsrichtung vorgesehen sind, wäre trotzdem die Bedienungssicherheit des Fahrbereichsschalters durch die große Anzahl von Schaltstellungen insbesondere bei nicht hinsehender Bedienung - also Bedienung ohne dass der Fahrer seinen Blick in Richtung des Bedienelementes richtet - stark eingeschränkt. Zudem muss der Fahrbereichsschalter für das Verlassen der Fahrprogramme X1 oder X2 und zur Anwahl der normalen Fahrposition über eine große Anzahl von Zwischenstufen bewegt werden.

Wenn beispielsweise angenommen wird, dass X1 ein Kriechgang-Programm für Vorwärtsfahrt bezeichnet, müsste ein Fahrer, der zunächst noch wenige Meter in Richtung einer Laderampe oder sonstigen Zielposition fahren und das Fahrzeug dann millimetergenau positionieren möchte, zunächst die D-Stellung wählen, um anschließend über die N-Position und die R-Position in die X1-Position zu schalten. Ein flüssiges Umschalten zwischen Kriechgängen und Schnellgängen ist damit nicht möglich. Zudem besteht das Risiko einer versehentlichen Wahl eines falschen Fahrbereiches und insbesondere eines Fahrbereiches in einer zur Wunschrichtung entgegengesetzten Richtung.

Die DE 100 16 582 A1 und DE 101 05 749 A1 offenbaren ähnliche Fahrbereichsschalter, wobei sich die Positionen für vorwärts- und rückwärtsgerichtete Kriechgänge jedoch auf den Endpositionen des Drehbereiches auf unterschiedlichen Seiten befinden und somit die Schaltstellungen zwischen dem Rückwärtsfahrbereich und dem Rückwärts-Kriechgangbereich benachbart sind und damit ein schnelles und sicheres Umschalten erlauben. Allerdings erfordert die Umschaltung zwischen den Kriechgang-Fahrbereichen für Vorwärts- und Rückwärtsgänge hier eine Schaltbewegung über sämtlich andere Bereiche hinweg. Dies ist gerade für den Rangierbetrieb, der oft durch ein wiederholtes und schnelles Umschalten zwischen dem Vorwärts und dem Rückwärts-Kriechgangbereich gekennzeichnet ist, ungünstig.

Vor diesem Hintergrund liegt der Erfindung die Aufgabe zugrunde, ein Steuerungsverfahren für ein automatisiertes Schaltgetriebe vorzustellen, bei dem mittels eines Fahrbereichsschalters auf für den Fahrer einfache und intuitiv bedienbare Weise ein Wechsel des Fahrbereiches sowohl zwischen den Vorwärtsgangbereichen und den Rückwärtsgangbereichen als auch zwischen einem Schnellgangmodus und einem Kriechgangmodus bewirkt werden kann.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich eine Information über die Intention des Fahrers bei der Einstellung eines Fahrbereichsschalters nicht nur aus der eingestellten Position des Schalters, sondern auch aus der Art der Betätigung und insbesondere aus der Betätigungsgeschwindigkeit gewinnen lässt. Die Geschwindigkeit der Betätigung des Fahrbereichsschalters bzw. die Zeitspanne zwischen dem Verlassen einer Ausgangsposition und der Einnahme einer Zielposition des Fahrbereichsschalters wird als Kriterium dafür verwendet, ob der Fahrer eine Einstellung eines Kriechgangmodus oder eines Schnellgangmodus bzw. einen Wechsel zwischen diesen Modi wünscht.

Demnach geht die Erfindung von einem Verfahren zur Steuerung eines automatisierten Schaltgetriebes aus, bei dem eine Steuerungseinrichtung unter einer Mehrzahl von Getriebegängen einen einzulegenden Getriebegang unter Berücksichtigung von Informationen auswählt, welche von einem Bediener mit Hilfe eines Fahrbereichsschalters zur manuellen Auswahl eines Fahrgangbereiches eingegeben wird, wobei der Fahrbereichsschalter zumindest eine D-Schaltstellung zur Auswahl eines Vorwärtsfahrgangbereichs, eine N-Stellung zur Auswahl einer Leerlaufstellung des automatisierten Schaltgetriebes und eine R-Schaltstellung zur Auswahl eines Rückwärtsfahrgangbereichs aufweist, und wobei das automatisierte Schaltgetriebe in einem Schnellgangmodus sowie in einem Kriechgangmodus betrieben werden kann.

Dabei umfasst der Schnellgangmodus diejenigen Getriebeübersetzungen, die unter üblichen Umständen im normalen Fahrbetrieb genutzt werden. Im Gegensatz hierzu umfasst der Kriechgangmodus solche Gänge, die eine sehr niedrige Fahrgeschwindigkeit ermöglichen und an den angetriebenen Rädern ein sehr hohes Drehmoment zur Verfügung stellen können. Letztere Gänge werden einerseits zum Rangieren genutzt, können aber auch zum Anfahren an starken Steigungen und/oder bei sehr hoher Zuladung sowie bei losem Untergrund wie z.B. losem Sand genutzt werden.

Welche Gänge bzw. Getriebeübersetzungen jeweils als Kriechgänge und welche als Schnellgänge einzuordnen sind, kann nicht allgemein festgelegt werden, sondern muss in Hinblick auf das jeweilige Fahrzeug, seinen Einsatzzweck und die vermutete Einsatzumgebung festgelegt werden. Es ist auch möglich, dass die Einordnung in Schnell- und Kriechgänge nicht statisch ist, sondern nach Wahl eines Bedieners oder in Abhängigkeit von Umgebungsparametern anpassbar ist. Auch ist es möglich, dass einzelne Gänge beiden Bereichen zugeordnet werden und dementsprechend sowohl im Kriechgangmodus als auch im Schnellgangmodus eingelegt werden können.

Schließlich ist es möglich, dass die Steuerung ohne explizite Eingabe des Bedieners vom Kriechgangmodus in den Schnellgangmodus wechselt, wenn beispielsweise eine bestimmte Geschwindigkeit im schnellsten Kriechgang überschritten wird und gleichzeitig die dem Motor abverlangte Leistung über eine gewisse Zeit unterhalb einer Grenzleistung bleibt. Zumindest der Vorwärtsfahrgangbereich umfasst neben Gängen des Schnellgangmodus zumindest einen Kriechgang. Bevorzugt weist jedoch auch der Rückwärtsfahrgangbereich zumindest einen Kriechgang auf.

Es versteht sich von selbst, dass die Fahrbereiche, die hier mit D, N und R bezeichnet sind, auch mit beliebigen anderen Buchstaben, Bezeichnungen oder Symbolen bezeichnet werden können. Auch ist es selbstverständlich möglich, neben den drei genannten Schaltstellungen des Fahrbereichsschalters noch eine beliebige Anzahl von weiteren Schaltstellungen vorzusehen. Diese weiteren Schaltstellungen können sich beispielsweise auf Obergrenzen für die anwählbaren Gänge innerhalb eines Fahrbereichs beziehen. Sie können aber auch jeweils einzelne diskrete Gangstufen bezeichnen, die bei Einstellung der entsprechenden Schaltstellung eingelegt werden.

Zur Lösung der gestellten Aufgabe ist nun zusätzlich vorgesehen, dass die Steuerungseinrichtung die Verstellgeschwindigkeit des Fahrbereichsschalters zumindest mit beurteilt, um zu entscheiden, ob ein Kriechgangmodus oder ein Schnellgangmodus aktiviert werden soll.

Die Verstellgeschwindigkeit kann dabei beispielsweise direkt über einen Geschwindigkeitssensor ermittelt werden, der beispielsweise eine Rotationsgeschwindigkeit oder eine lineare Geschwindigkeit misst. Einfacher und kostengünstiger ist es jedoch, die Zeit zwischen dem Verlassen einer Ausgangschaltstellung und der Einnahme einer Zielschaltstellung zu ermitteln. Schließlich kann bei Schaltbewegungen über mehrere Schaltstufen ermittelt werden, wie lange die eine oder mehrere Schaltstellungen, welche zwischen der Ausgangschaltstellung und der Zielschaltstellung liegen, geschaltet sind. Im einfachsten Fall kann hierfür ein Grenzzeitwert festgelegt werden, bei dessen Unterschreitung die entsprechende Stellung entweder als nicht geschaltet gilt oder nicht als geschaltet erkannt wird. In diesem Fall würde beispielsweise bei einer Reihenfolge R - N - D der Schaltstellungen bei einem schnellen Wechsel von der R-Stellung in die D-Stellung die N-Stellung entweder nicht erkannt oder ignoriert, womit sich aus der erkannten Schaltreihenfolge von R direkt zu N eine Aussage über die Schaltgeschwindigkeit treffen lässt.

In einer Ausführungsform der Erfindung ist vorgesehen, dass die Steuerungseinrichtung das automatisierte Schaltgetriebe bei einer Verstellung des Fahrbereichsschalters von der N-Stellung in die D-Stellung oder in die R-Stellung in einen Kriechgangmodus schaltet, wenn die Verstellgeschwindigkeit des Fahrbereichsschalters unterhalb eines ersten Grenzwertes liegt und in einen Schnellgangmodus schaltet, wenn die Verstellgeschwindigkeit oberhalb des Grenzwertes liegt.

Dem liegt die Überlegung zu Grunde, dass es im täglichen normalen Fahrbetrieb erwünscht sein kann, bei einer schnellen Betätigung in die Schnellgänge zu schalten, da ein routinierter Fahrer den Fahrbereich z.B. nach dem Starten des Motors ebenso beiläufig wählt, wie der Fahrer eines Pkws mit manuellem Schaltgetriebe nicht darüber nachdenkt, auf welche Weise er den ersten Gang einlegt. Beides geschieht, ohne das der Fahrer sich auf den Vorgang konzentriert und meist auch mit einer relativ hohen Bediengeschwindigkeit.

Demgegenüber zeichnet sich der Rangierbetrieb oder auch das Anfahren in tiefem Sand oder mit hoher Zuladung an starken Steigungen durch eine relativ bewusste Betätigung der Bedienungselemente aus, wobei sich der Fahrer voll auf die Bedienung des Fahrzeugs konzentriert. Daher kann in diesen Situationen eher davon ausgegangen werden, dass der Fahrer zum einen aufgrund der komplexeren Bedienung und höheren Anspannung von sich aus den Fahrbereichsschalter langsamer bedient. Zudem ist es für den Fahrer in diesen sehr bewussten Fahrphasen leichter, sich an eine ebenfalls bewusste, nämlich etwas langsamere Bedienung zu erinnern.

Gemäß einer anderen Variante des Verfahrens kann allerdings auch vorgesehen sein, dass die Steuerungseinrichtung das automatisierte Schaltgetriebe bei einer Verstellung des Fahrbereichsschalters von der N-Stellung in die D-Stellung oder in die R-Stellung in einen Kriechgangmodus schaltet, wenn die Verstellgeschwindigkeit des Fahrbereichsschalters oberhalb eines ersten Grenzwertes liegt und in einen Schnellgangmodus schaltet, wenn die Verstellgeschwindigkeit unterhalb des Grenzwertes liegt.

Dies kann insbesondere für Fahrzeuge oder Einsatzzwecke günstig sein, bei denen der Rangierbetrieb einen relativ großen Anteil am Gesamtbetrieb des Fahrzeugs hat, da dann durch die schnelle Schaltbewegung der Fahrer während der Rangierfahrten davon entlastet wird, auf eine langsame Betätigung des Fahrbereichsschalters zu achten. Die geringfügig kürzere Schaltzeit ist an dieser Stelle eher von psychologischer als von betriebswirtschaftlicher Bedeutung, da sich die Verlängerung der Schaltzeit durch die langsame Betätigung des Fahrbereichsschalters meist im Bereich von deutlich unter einer Sekunde bewegt.

Während bisher Schaltvorgänge aus der Neutralstellung heraus beschrieben wurden, sind gerade bei Rangierfahrten Wechsel zwischen Vorwärts- und Rückwärtsfahrt häufig. Diese werden im Folgenden beschrieben.

Nach einer ersten diesbezüglichen Variante hierzu kann vorgesehen sein, dass die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung dann im zuvor eingestellten Modus belässt, wenn die Verstellgeschwindigkeit oberhalb eines zweiten Grenzwertes liegt, und in den jeweils anderen Modus wechselt, wenn die Verstellgeschwindigkeit unterhalb des zweiten Grenzwertes liegt. Dies ist deshalb günstig, weil ein Moduswechsel, also Wechsel zwischen dem Kriechgangmodus und dem Schnellgangmodus oder andersherum erstens sehr viel seltener vorkommen, als Wechsel zwischen Vorwärts- und Rückwärtsfahrt innerhalb des selben Modus. Zudem kann bei einem Moduswechsel von einer sehr viel bewussteren Bedienung des Fahrbereichsschalters und ganz allgemein von einem höheren Aufmerksamkeitsgrad des Fahrers ausgegangen werden. Damit kann die bewusst verlangsamte Bedienung vom Fahrer eher für den Moduswechsel gefordert werden, als für den Betrieb innerhalb des selben Modus.

Auch hier kann es jedoch in bestimmten Fällen günstiger sein, die Steuerung gerade andersherum zu treffen, nämlich so, dass die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung dann im zuvor eingestellten Modus belässt, wenn die Verstellgeschwindigkeit unterhalb eines zweiten Grenzwertes liegt und in den jeweils anderen Modus wechselt, wenn die Verstellgeschwindigkeit oberhalb des zweiten Grenzwertes liegt.

Sinnvoll ist dieses Steuerungsverhalten beispielsweise für Fahrzeuge, die häufig mit der Heckseite an eine Ladebucht fahren. Dies geschieht bevorzugt in einem Kriechgangmodus. Bei einer Richtungsumkehr liegt jedoch in der Regel kein Grund für einen Kriechgangmodus vor, da das Fahrzeug nicht mehr rangiert, sondern zu einer in der Regel längeren Fahrt aufbricht. Diese Art der Steuerung kann auch dafür sorgen, dass bei der Wahl eines Rückwärtsganges aus dem normalen Fahrbetrieb heraus nur dann ein Schnellgang gewählt wird, wenn dies vom Fahrer durch bewusst langsame Betätigung des Fahrbereichsschalters angefordert wird. Andernfalls wird ein langsamerer und damit sichererer Kriechgang gewählt.

Während bei den vorstehenden Ausprägungen des Verfahrens gemäß der Erfindung durch eine langsame bzw. schnelle Betätigung des Fahrbereichsschalters ein Moduswechsel ausgelöst wurde, kann in einer dazu alternativen Ausgestaltung vorgesehen sein, dass der Fahrer unabhängig vom aktuell aktiven Modus durch die Betätigungsgeschwindigkeit des Fahrbereichsschalters direkt bestimmen kann, ob ein Gang des Kriechgangmodus oder ein Gang des Schnellgangmodus eingelegt werden soll.

Dabei stellt die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung in den Kriechgangmodus ein, wenn die Verstellgeschwindigkeit unterhalb eines dritten Grenzwertes liegt, und in den Schnellgangmodus ein, sofern die Verstellgeschwindigkeit oberhalb des dritten Grenzwertes liegt.

Da es vorkommen kann, dass ein Fahrer den Fahrbereichsschalter z.B. in die R-Stellung bringt, sich dann jedoch ohne tatsächlich zurückzusetzen dafür entscheidet, zunächst noch ein kurzes Stück vor zu ziehen, könnte es vorkommen, dass der Fahrer den Überblick verliert, welchen Modus er zuvor aktiviert hat. Dies ist bei der vorliegenden Variante des Verfahrens völlig unerheblich, da die Wahl des Modus vom zuvor aktiven Modus unabhängig ist.

In vielen Fällen ist es analog zu den bereits gemachten Ausführungen vorteilhaft, bei einer bewusst geringen Betätigungsgeschwindigkeit den Kriechgangmodus zu aktivieren und bei einer schnelleren Geschwindigkeit den Schnellgangmodus zu aktivieren, um im normalen Straßenverkehr bei schnellen Betätigungsgeschwindigkeiten den Schnellgangmodus zu wählen.

Auch hier kann jedoch das genau umgekehrte Steuerungsverhalten in bestimmten Fällen vorteilhaft sein, nämlich dass die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung in den Kriechgangmodus einstellt, wenn die Verstellgeschwindigkeit oberhalb eines dritten Grenzwertes liegt, und in den Schnellgangmodus einstellt, wenn die Verstellgeschwindigkeit unterhalb des dritten Grenzwertes liegt.

Dies ist insbesondere für Fahrzeuge der Fall, bei denen der Rangierbetrieb einen wesentlichen oder den größeren Anteil des Betriebs ausmacht, da der Fahrer dieser Rangierfahrzeuge dann bei der routinierten schnellen Umschaltung zwischen der R-Stellung und der D-Stellung jeweils den Kriechgangmodus wählt.

Insbesondere bei einigen der zuletzt genannten Verfahrensvarianten kann es vorteilhaft sein, festzulegen, was bei einer Anwahl der N-Stellung - außer der Schaltung des Getriebes in eine Neutralstellung - geschehen soll.

Im einfachsten Fall geht das Getriebe bei Einstellung der N-Stellung des Fahrbereichsschalters bezüglich des Modus wieder in eine indifferente Grundstellung, wobei dann bei der nächsten Einstellung der D-Stellung oder der R-Stellung der zu wählende Modus von der Verstellgeschwindigkeit abhängig ist. Für dieses eingangs beschriebene Verfahren ist es jedoch notwendig, auch bei der Verstellung des Fahrbereichsschalters zwischen zwei benachbarten Schaltpositionen eine Schaltgeschwindigkeit zu ermitteln, welches einen erhöhten Aufwand bedeutet.

Erheblich einfacher ist die Ermittlung der Verstellgeschwindigkeit, wenn eine Verstellbewegung über zumindest eine Zwischenposition, also beispielsweise von D über N nach R oder umgekehrt, vorliegt. Einerseits steigt mit dem Verstellweg auch die Verstellzeit, so dass deren Erfassung einfacher wird, andererseits sind viele Schalter so ausgelegt, dass sie eine Schaltstellung über einen relativ großen Verstellweg beibehalten um dann durch vorgespannte Federn sehr schnell in den benachbarten Schaltzustand zu wechseln. Bei diesen Schaltern ist bei der Betätigung zwischen zwei benachbarten Schaltpositionen die Ermittlung der Betätigungsgeschwindigkeit aus den Schaltsignalen nicht oder nur mit einem unverhältnismäßig hohen Aufwand durchführbar. Sofern diese Schalter jedoch über zwei Positionen geschaltet werden, ist die Ermittlung eines Maßes für die Betätigungsgeschwindigkeit über die Dauer des Verharrens des Schalters in der Zwischenposition sehr einfach und komfortabel möglich.

Es ist damit schaltungstechnisch und in bezug auf den Auswertungsaufwand zur Bestimmung der Verstellgeschwindigkeit des Fahrbereichsschalters besonders günstig, wenn die Steuerungseinrichtung das automatisierte Schaltgetriebe bei einer Verstellung des Fahrbereichsschalters von der R-Stellung oder der D-Stellung in die N-Stellung und bei einem Verbleib des Fahrbereichsschalters in dieser N-Stellung für eine Zeitspanne oberhalb eines vierten Grenzwertes in den Kriechgangmodus stellt.

Dies entspricht einer Anwahl des Kriechgangmodus bei langsamer Verstellung und führt außerdem zu einer Voreinstellung des Kriechgangmodus schon bei der Anwahl der N-Stellung. Diese Voreinstellung kann insbesondere für Rangierfahrzeuge beispielsweise in Verbindung mit Verstellverfahren gemäß den Ansprüchen 4 und 5 vorteilhaft sein, da hier bei der ersten Schaltung nach Einstellung des Leerlaufs zunächst der langsamere und damit sicherere Kriechgangmodus aktiviert ist. Wünscht der Fahrer den Schnellgangmodus, so kann dieser mit geringem Aufwand dadurch eingestellt werden, dass der Fahrer zunächst kurz die R-Stellung wählt und sofort anschließend mit entsprechender Geschwindigkeit in die D-Stellung - beziehungsweise umgekehrt - schaltet.

Selbstverständlich kann es für manche Anwendungen auch hier günstiger sein, wenn die Steuerungseinrichtung das automatisierte Schaltgetriebe bei einer Verstellung des Fahrbereichsschalters von der R-Stellung oder der D-Stellung in die N-Stellung und bei einem Verbleib des Fahrbereichsschalters in dieser N-Stellung für eine Zeitspanne oberhalb eines vierten Grenzwertes in den Schnellgangmodus einstellt. Auf diese Weise steht nach einem Einlegen des Leerlaufs bei der ersten Fahrgangwahl automatisch ein Schnellgang zur Verfügung, welches insbesondere im normalen Fahrbetrieb günstig ist.

Für alle vorstehend erläuterten Verfahren ist es wünschenswert, dass der jeweils aktivierte Modus und/oder der Wechsel des Modus dem Fahrer akustisch und/oder optisch und/oder haptisch angezeigt wird. Auf diese Weise ist der Fahrer stets über den aktivierten Modus informiert bzw. wird bei einem Moduswechsel darauf besonders aufmerksam gemacht.

Zur Implementierung des erfindungsgemäßen Verfahrens ist es günstig, wenn der Fahrbereichsschalter ein Drehschalter ist, bevorzugt ein Drehschalter mit genau drei Schaltstellungen.

Drehschalter lassen sich ergonomisch besonders günstig im Cockpit anordnen und ein Drehschalter mit nur drei Schaltstellungen lässt sich besonders gut blind - also ohne dass der Fahrer seinen Blick vom Straßenverkehr abwenden muss - bedienen. Selbstverständlich lässt sich das erfindungsgemäße Verfahren jedoch auch mit anderen Bedienelementen, insbesondere Schiebeschaltern oder Knüppelschaltvorrichtungen nach Art von herkömmlichen Schaltgassen für Pkws mit Automatikschaltungen realisieren. Auch ist es denkbar, neben den beschriebenen drei Schaltstellungen weitere Schaltstellungen für Sonderzwecke vorzusehen. In diesem Fall ist jedoch eine deutliche haptische Trennung der Stellungen D, N und R von den übrigen Stellungen vorteilhaft, um eine zweifelsfreie blinde Bedienung zu ermöglichen.

## Patentansprüche

1. Verfahren zur Steuerung eines automatisierten Schaltgetriebes, bei dem eine Steuerungseinrichtung unter einer Mehrzahl von Getriebegängen einen einzulegenden Getriebegang unter Berücksichtigung von Informationen auswählt, welche von einem Bediener mit Hilfe eines Fahrbereichsschalters zur manuellen Auswahl eines Fahrgangbereiches eingegeben werden, wobei der Fahrbereichsschalter zumindest eine D-Schaltstellung zur Auswahl eines Vorwärtsfahrgangbereichs, eine N-Stellung zur Auswahl einer Leerlaufstellung des automatisierten Schaltgetriebes und eine R-Schaltstellung zur Auswahl eines Rückwärtsfahrgangbereichs besitzt, und das automatisierte Schaltgetriebe in einem Schnellgangmodus sowie in einem Kriechgangmodus betrieben werden kann, **dadurch gekennzeichnet, dass** die Steuerungseinrichtung die Verstellgeschwindigkeit des Fahrbereichsschalters zumindest mit beurteilt, um zu entscheiden, ob ein Kriechgangmodus oder ein Schnellgangmodus aktiviert werden soll.

2. Verfahren nach Anspruch 1, **dadurch gekennzeichnet, dass** die Steuerungseinrichtung das automatisierte Schaltgetriebe bei einer Verstellung des Fahrbereichsschalters von der N-Stellung in die D-Stellung oder in die R-Stellung in einen Kriechgangmodus schaltet, wenn die Verstellgeschwindigkeit des Fahrbereichsschalters unterhalb eines ersten Grenzwertes liegt und in einen Schnellgangmodus schaltet, wenn die Verstellgeschwindigkeit oberhalb des Grenzwertes liegt.

3. Verfahren nach Anspruch 1, **dadurch gekennzeichnet, dass** die Steuerungseinrichtung das automatisierte Schaltgetriebe bei einer Verstellung des Fahrbereichsschalters von der N-Stellung in die D-Stellung oder in die R-Stellung in einen Kriechgangmodus schaltet, wenn die Verstellgeschwindigkeit des Fahrbereichsschalters oberhalb eines ersten Grenzwertes liegt und in einen Schnellgangmodus schaltet, wenn die Verstellgeschwindigkeit unterhalb des Grenzwertes liegt.

4. Verfahren nach wenigstens einem der vorherigen Ansprüche, **dadurch gekennzeichnet, dass** die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung dann im zuvor eingestellten Modus belässt, wenn die Verstellgeschwindigkeit oberhalb eines zweiten Grenzwertes liegt und in den jeweils anderen Modus wechselt, wenn die Verstellgeschwindigkeit unterhalb des zweiten Grenzwertes liegt.

5. Verfahren nach wenigstens einem der Ansprüche 1 bis 3, **dadurch gekennzeichnet, dass** die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung dann im zuvor eingestellten Modus belässt, wenn die Verstellgeschwindigkeit unterhalb eines zweiten Grenzwertes liegt und in den jeweils anderen Modus wechselt, wenn die Verstellgeschwindigkeit oberhalb des zweiten Grenzwertes liegt.

6. Verfahren nach wenigstens einem der Ansprüche 1 bis 3, **dadurch gekennzeichnet, dass** die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung den Kriechgangmodus einstellt, wenn die Verstellgeschwindigkeit unterhalb eines dritten Grenzwertes liegt und den Schnellgangmodus einstellt, wenn die Verstellgeschwindigkeit oberhalb des dritten Grenzwertes liegt.

7. Verfahren nach wenigstens einem der Ansprüche 1 bis 3, **dadurch gekennzeichnet, dass** die Steuerungseinrichtung das automatisierte Schaltgetriebe bei einer Verstellung des Fahrbereichsschalters von der R-Stellung in die D-Stellung oder bei einer Verstellung von der D-Stellung in die R-Stellung den Kriechgangmodus einstellt, wenn die Verstellgeschwindigkeit oberhalb eines dritten Grenzwertes liegt und den Schnellgangmodus einstellt, wenn die Verstellgeschwindigkeit unterhalb des dritten Grenzwertes liegt.

8. Verfahren nach wenigstens einem der Ansprüche 1, 6 oder 7, **dadurch gekennzeichnet, dass** die Steuerungseinrichtung das automatisierte Schaltgetriebe bei einer Verstellung des Fahrbereichsschalters von der R-Stellung oder der D-Stellung in die N-Stellung und einem Verbleib des Fahrbereichsschalters in der N-Stellung für eine Zeitspanne oberhalb eines vierten Grenzwertes in den Kriechgangmodus einstellt.

9. Verfahren nach wenigstens einem der Ansprüche 1, 6 oder 7, **dadurch gekennzeichnet, dass** die Steuerungseinrichtung das automatisierte Schaltgetriebe bei einer Verstellung des Fahrbereichsschalters von der R-Stellung oder der D-Stellung in die N-Stellung und einem Verbleib des Fahrbereichsschalters in der N-Stellung für eine Zeitspanne oberhalb eines vierten Grenzwertes in den Schnellgangmodus einstellt.

10. Verfahren nach wenigstens einem der vorherigen Ansprüche, **dadurch gekennzeichnet, dass** der jeweils aktivierte Modus und/oder der Wechsel des Modus dem Fahrer akustisch und/oder optisch und/oder haptisch angezeigt wird.

11. Vorrichtung zur Durchführung des Verfahrens nach wenigstens einem der vorherigen Ansprüche, **dadurch gekennzeichnet, dass** der Fahrbereichsschalter ein Drehschalter ist, bevorzugt ein Drehschalter mit genau drei Schaltstellungen.
